# EUROPÄISCHE PATENTANMELDUNG

(11) **EP 1 471 007 A1**
(43) Veröffentlichungstag der Anmeldung: **27.10.2004**
(21) Anmeldenummer: 04405229.8
(22) Anmeldetag: 15.04.2004
(51) Int. Cl.: B65B 43/44, B65G 59/10

(54) **Separierungseinrichtung zur Vereinzelung von Stapelgutelementen**

(30) Priorität: 25.04.2003 CH 20030738
(71) Anmelder: Ideacorp AG, 6331 Hünenberg (CH)
(72) Erfinder: Tüns, Heinz-Josef, 8447 Dachsen (CH)
(74) Vertreter: Bremi, Tobias, Dr.

(57) **Zusammenfassung**

Die Erfindung betrifft eine Separierungsvorrichtung (1), mit der in einem Stapel (2) angeordnete, im wesentlichen becher- oder napfförmige Stapelgutelemente (4) in einer Entnahmerichtung (E) vereinzelt werden. Die Separierungsvorrichtung (1) weist am Entnahmeende (7) des Stapels (2) eine Halteeinrichtung (8) auf, durch die der Stapel (2) zurückgehalten wird. Um bei hohen Vereinzelungsgeschwindigkeiten eine sichere Vereinzelung der Stapelgutelemente (4) zu gewährleisten, weist erfindungsgemäss die Halteeinrichtung (8) einen Andrückbereich (9) auf, der in einer Haltestellung in eine quer zur Entnahmerichtung (E) weisende Andrückrichtung (A) elastisch gegen den Stapel (2) drückend ausgestaltet ist.

## Beschreibung

### TECHNISCHES GEBIET

Die Erfindung betrifft eine Separierungseinrichtung zur Vereinzelung von in einem Stapel angeordneten, im wesentlichen becher- oder napfförmigen Stapelgutelementen, wie Kaffeepulver-Kapseln, mit einer an einem Entnahmeende des Stapels angeordneten, den Stapel entgegen eine Entnahmerichtung zurückhaltenden Halteeinrichtung.

### STAND DER TECHNIK

Separierungseinrichtungen mit den eingangs genannten Merkmalen sind bekannt. Sie werden bei der Herstellung von tiefgezogenen oder blasgeformten Bechern und Näpfen dazu verwendet, die nach der Formung aufeinander gestapelten Stapelgutelemente wieder zu vereinzeln, so dass sie gefüllt und versiegelt werden können.

Die Stapelung der Stapelgutelemente hat den Vorteil, dass sich die Stapelgutelemente platzsparend und dadurch kostengünstig von ihrem Herstellort, wo sie aus Rohmaterial oder Vorformlingen gefertigt werden, zu einem Befüllungsort, beispielsweise einer Abfüllanlage für Lebensmittel, transportieren lassen.

Bislang werden die Stapel aus Stapelgutelementen dadurch vereinzelt, dass zwei bezüglich des Stapels gegenüber liegende, durch einen Schlitten gekoppelte Schneiden (Messer) quer zum Stapel jeweils in dem Stapel zwischen zwei Stapelgutelemente bewegt werden. Die lichte Weite zwischen den Schneiden ist dabei so bemessen, dass während der Querbewegung genau ein Stapelgutelement zwischen den beiden Schneiden hindurch vom Stapel weggezogen werden kann. Hierzu ist die Schlittenbewegung mit der Bewegung einer Entnahmevorrichtung synchronisiert, durch die das in Entnahmerichtung letzte Stapelgutelement ergriffen und in Entnahmerichtung vom Stapel wegbewegt wird.

Der Nachteil derartiger Separierungsvorrichtungen liegt darin, dass der konstruktive Aufwand im Allgemeinen recht hoch ist. Ausserdem müssen die in den Stapel bewegten Schneiden stets scharf und gerade sein, da ansonsten nicht mehr gewährleistet ist, dass die Schneiden exakt in den Spalt zwischen zwei Stapelgutelementen eintauchen können. Stumpfe oder verbogene Messer führen zu einer Beschädigung der Stapelgutelemente, was einerseits in Bezug auf die optische Erscheinung der Stapelgutelemente unerwünscht ist, was aber insbesondere dazu führen kann, dass anschliessende Versiegelungsprozesse nicht zuverlässig ablaufen und entsprechend hoher Ausschuss anfällt.

Andere Separierungsvorrichtungen mögen zur Getränkeausgabe bei Getränkeautomaten, in denen die Trinkbecher stapelweise hineingeladen und einzeln ausgegeben werden, bekannt sein. Derartige Separierungsvorrichtungen sind jedoch nicht ohne weiteres für die Hochgeschwindigkeitsanwendungen im Herstell- und Abfüllprozess der Stapelgutelemente geeignet.

### DARSTELLUNG DER ERFINDUNG

Daher liegt der Erfindung die Aufgabe zugrunde, die bekannten Separierungsvorrichtungen so zu verbessern, dass bei einem konstruktiv geringem Aufwand eine zuverlässige und gegenüber Störungen unempfindliche Vereinzelung von becher- oder napfförmigen, gestapelten Stapelgutelementen mit hoher Geschwindigkeit möglich ist.

Diese Aufgabe wird erfindungsgemäss für eine Separierungsvorrichtung der eingangs genannten Art dadurch gelöst, dass die Halteeinrichtung einen Andrückbereich aufweist, der in einer Haltestellung in eine quer zur Entnahmerichtung weisende Andrückrichtung elastisch und/oder gefedert gegen den Stapel drückend ausgestaltet ist.

Diese Lösung ist konstruktiv einfach, da auf den Schlitten mit den daran angebrachten Messern und der Synchronisierung des Schlittens mit der Entnahmebewegung verzichtet werden kann. Stattdessen drückt ein Andrückbereich elastisch gegen den Stapel und wird so bei der Entnahme eines Stapelgutelements vom Stapel passiv entgegen die elastische Vorspannung, d.h. gegen eine Rückstellkraft ausgelenkt. Überraschenderweise ist dieser einfache Aufbau für die Vereinzelung auch mit sehr hohen Vereinzelungsgeschwindigkeiten geeignet, ohne dass Störungen im Verfahrensablauf oder Beschädigungen an den Stapelgutelementen auftreten. Unter hohen Vereinzelungsgeschwindigkeiten sind in diesem Zusammenhang insbesondere Geschwindigkeiten von im Bereich von bis zu 100 bis 120 Stapelgutelementen pro Minute zu verstehen, wobei aber bereits eine Vereinzelung von im Bereich von 40 bis 50 Stapelgutelementen pro Minute schon als hohe Vereinzelungsgeschwindigkeit betrachtet werden muss.

Die vom Andrückbereich erzeugte Andrückkraft kann in einer Ausgestaltung durch die Eigenfestigkeit des Stapels aufgenommen werden. Um Beschädigungen und Verformungen der ineinander gestapelten Stapelgutelemente bei der Vereinzelung zu vermeiden, kann ein Gegenhaltemittel an der Separierungsvorrichtung vorgesehen sein, das der quer durch den Stapel geleiteten Andrückkraft entgegenwirkt. Damit der Kraftfluss durch den Stapel möglichst kurz ist, kann das Gegenhaltemittel in etwa auf Höhe der Halteeinrichtung angeordnet sein. Es können auch mehrere in Umfangsrichtung um den Stapel verteilte Gegenhaltemittel vorgesehen sein. Als Gegenhaltemittel kann auch eine Halteeinrichtung dienen. Das Gegenhaltemittel kann bevorzugt einen Vorsprung zum leichten Untergreifen des letzten Stapelgutelements aufweisen.

Die Andrückkraft kann insbesondere bei Stapeln, die in der Separierungsvorrichtung in Schwerkraftrichtung aufgenommen sind, so bemessen sein, dass das Stapelgewicht in der Haltestellung von der Halteeinrichtung aufgenommen wird. Durch die im wesentlichen quer zur Entnahmerichtung wirkende Andrückkraft ist dabei sichergestellt, dass bei fortschreitender Vereinzelung eines Stapels und dementsprechend sinkendem Stapelgewicht das Ende des Stapels stets an der gleichen Stelle liegt bzw. das Entnahmeende nur geringfügig auswandert.

Das Gewicht des Stapels kann dadurch aufgenommen werden, dass der Andrückbereich mit einer die Haftreibung zwischen der Halteeinrichtung und den Stapelgutelementen begünstigenden Schicht versehen ist, und dass durch die quer zur Entnahmerichtung und der Stapelrichtung wirkenden Andrückkraft im wesentlichen ein Reibschluss zwischen der Halteeinrichtung und dem Stapel erzeugt wird.

In einer weiteren vorteilhaften Ausgestaltung kann der Andrückbereich in der Haltestellung das in der Entnahmerichtung letzte Stapelgutelement des Stapels untergreifen, so dass das Gewicht des Stapels zu einem Teil vom Andrückbereich formschlüssig aufgenommen werden kann.

Aufgrund der passiven, elastischen Auslenkbarkeit des Andrückbereichs muss das zu vereinzelnde Stapelgutelement aus der Haltestellung heraus gegen die Wirkung der Andrückkraft am Andrückbereich vorbei bewegt werden, während gleichzeitig der Stapel durch die Halteeinrichtung zurückgehalten wird. Um den Bewegungswiderstand bei dieser Vereinzelungsbewegung herabzusetzen, kann in einer weiteren vorteilhaften Ausgestaltung der Andrückbereich um eine im wesentlichen quer zur Entnahmerichtung verlaufende Drehachse relativ zum Stapel drehbar respektive schwenkbar an der Separierungsvorrichtung gehalten sein. Unter den Begriff drehbar fallen dabei sowohl rotierende als auch schwenkende bzw. wippende Bewegungen des Andrückbereiches. Bei dieser Ausgestaltung kann der Andrückbereich der Bewegung des zu vereinzelnden Stapelgutelements in Entnahmerichtung leichter folgen, so dass die Reibung zwischen dem Stapel und dem Andrückbereich und dadurch die Gefahr von Beschädigungen an den Stapelgutelementen verringert wird.

Diese Ausgestaltung kann weiter verbessert werden, indem die Drehachse in der Haltestellung in Entnahmerichtung hinter dem Einleitungsort der Andrückkraft bzw. in Entnahmerichtung hinter dem Stapel angeordnet ist.

Eine besonders bevorzugte Ausführungsform der vorliegenden Erfindung zeichnet sich dadurch aus, dass die Halteeinrichtung ein um die Drehachse schwenkbares Halteelement umfasst, an dessen dem Stapel zugewandtem Ende ein Haltevorsprung zum Untergreifen des letzten Stapelgutelements angeordnet ist, wobei das Halteelement mit seinem Haltevorsprung gegen den Stapel drückend ausgestaltet ist, und gegen eine Rückstellkraft um die Drehachse vom Stapel weg ausgelenkt werden kann. Im Moment der Vereinzelung wird ein derartiges Halteelement um die Drehachse so weit durch den Zug am zu vereinzelnden letzten Stapelgutelement ausgelenkt und vom Stapel abgelenkt, dass das letzte Stapelgutelement nicht mehr untergriffen und somit freigegeben wird. Durch die Rückstellkraft wird unmittelbar nach der Freigabe des letzten Stapelgutelements das Halteelement wieder gegen den Stapel zurückgeführt, und untergreift das nächste, im anfolgenden Vereinzelungsschritt freizugebende Stapelgutelement. Vorzugsweise wird dabei die Rückstellkraft wenigstens mittelbar über eine Feder gewährleistet. Es kann sich dabei um eine Spiralfeder handeln, welche direkt an der Drehachse eine Rückstellkraft gewährleistet, es ist aber auch möglich, eine einfache Druckfeder, gegebenenfalls mittelbar über einen Gegendruckstift, zu verwenden, welche am Halteelement anliegt.

Da es vorkommen kann, dass z. B. in Störsituationen von unten, d. h. entgegen der Entnahmerichtung, ein Stapelgutelement wieder zurück zum Stapel geführt wird, kann es sich als sinnvoll erweisen, Massnahmen zu treffen, um zu verhindern, dass dann keines der Stapelgutelemente beschädigt wird und unmittelbar danach wieder eine stabile Situation eintritt. Dies kann erreicht werden, indem die Separierungsvorrichtung dadurch gekennzeichnet ist, dass das Halteelement ein erstes Element umfasst, welches über die Drehachse schwenkbar an der Separierungsvorrichtung angeschlagen ist, und dass das Halteelement ein zweites Element umfasst, an dessen dem Stapel zugewandtem Ende der Haltevorsprung angeordnet ist. Dabei ist das zweite Element über eine Gegendrehachse schwenkbar am ersten Element derart befestigt, dass bei Anliegen einer Kraft am Haltevorsprung im wesentlichen in Entnahmerichtung das gesamte Halteelement um die Drehachse ausgelenkt wird. Mit anderen Worten ist bei Anliegen einer Kraft in Entnahmerichtung die Einheit aus erstem und zweitem Element eine starre Einheit, welche um die Drehachse vom Stapel weg ausgelenkt wird, in dem Moment wo das und erste Stapelgutelement abgezogen wird. Wird nun ein Stapelgutelement von unten in umgekehrter Richtung an die Separierungsvorrichtung geführt, d. h. bei Anliegen einer Kraft am Haltevorsprung im wesentlichen entgegen der Entnahmerichtung, dann verbleibt das erste Element im wesentlichen positionsstabil und das zweite Element schwenkt um die Gegendrehachse relativ zum ersten Element ab, sodass der Haltevorsprung dem Stapel ausweicht. Auf diese Weise kann ein von unten zugeführtes Stapelgutelement wieder dem Stapel zugeführt werden, ohne dass das Stapelgutelement dabei beschädigt wird, und ohne dass der Vereinzelungsprozess anschliessend gestört ist. Konkret kann ein derartiges Halteelement so gestaltet werden, dass das erste Element im wesentlichen L-förmig mit zwei Schenkeln ausgebildet ist, wobei der erste der beiden Schenkel parallel zur Stapelrichtung angeordnet ist und die Drehachse am der Entnahmerichtung abgewandten Ende des ersten Schenkels angeordnet ist. Dabei ist der zweite der beiden Schenkel des ersten Elements zur Stapelachse gerichtet und die Gegendrehachse am dem Stapel zugewandten Ende des zweiten Schenkels im wesentlichen parallel zur Drehachse angeordnet. Ausserdem ist das zweite Element bei einer Kraft am Haltevorsprung im wesentlichen in Entnahmerichtung im wesentlichen parallel zum zweiten Schenkel angeordnet.

U. U. muss bei einer derartigen Separierungsvorrichtung gewährleistet werden, dass der durch den Stapel ausgeübten Druck auf die Separierungsvorrichtung nicht zu gross wird. Üblicherweise sind nämlich die Stapel von Stapelgutelementen sehr lang, und werden nur von Zeit zu Zeit nachgefüllt. Entsprechend gibt es grosse Unterschiede im Druck auf die Separierungsvorrichtung zwischen der gewissermassen nachgefüllten Position, wenn das Maximum an Stapelgutelementen im Stapel sind, und der Position unmittelbar vor dem Nachfüllen, wenn nur noch sehr wenige Stapelgutelemente im Stapel sind. Soll eine äusserst langer Stapel mit entsprechend grosser Gewichtskraft auf dem zu vereinzelnden Stapelgutelement durch die Separierungsvorrichtung gehalten werden, müsste entsprechend eine grosse Rückstellkraft am Andrückbereich gewährleistet werden. Dies führt aber andererseits zu einer entsprechend grösseren erforderlichen Kraft, um das zu vereinzelnde letzte Stapelgutelement vom Stapel zu lösen, was hinwiederum zu einer höheren Wahrscheinlichkeit der Verletzung der Stapelgutelemente führt.

Entsprechend erweist es sich als vorteilhaft, nicht den gesamten Gewichtsdruck des Stapels auf das zu vereinzelnde Stapelgutelement respektive auf die untersten Stapelgutelemente wirken zulassen, sondern diesen über entsprechende Vorrichtungen aufzufangen. Konkret kann dies so geschehen, dass Mittel angeordnet sind, welche eine kontrollierte Stapeldosierung gewährleisten. Diese Mittel können einen oder bevorzugt wenigstens zwei in Stapelrichtung übereinander angeordnete, den Stapel kontrolliert in Entnahmerichtung blockierende Stopper umfassen, wobei die Stopper in alternierender Weise den Stapel derart zu blockieren respektive zu fördern (respektive vielmehr loszulassen) in der Lage sind, dass die am Andrückbereich anliegende Gewichtskraft des Stapels nie einen Wert überschreitet, welcher dazu fuhren könnte, dass ohne aktives Greifen des zu vereinzelnden Stapelgutelements Stapelgutelemente den Stapel in Entnahmerichtung verlassen.

Weisen die Entnahmerichtung und die Schwerkraftrichtung gemeinsame Komponenten auf oder fallen sie zusammen, so kann die Drehachse auch unterhalb des Stapels liegen. Diese Anordnung der Drehachse führt durch die in den Stapel eingeleitete, von der Drehachse beabstandete Andrückkraft zu einem Drehmoment des Andrückbereichs um die Drehachse, so dass sich der Andrückbereich selbsttätig unterhalb des Stapels einschwenken kann. Auf diese Weise kann das Gewicht des Stapels besser aufgenommen werden, und durch die resultierende Schwenkbewegung des Andrückbereichs das zu vereinzelnde Stapelgutelement zuverlässiger vom Stapel getrennt werden.

In einer konstruktiv einfachen Weiterbildung kann dabei der Andrückbereich von wenigstens einem Abschnitt der Umfangsfläche eines Drehkörpers, wie beispielsweise einer Rolle oder Walze, gebildet sein.

Bei der Vereinzelung eines Stapelgutelements, d. h. in einer Vereinzelungsstellung der Halteeinrichtung, kann der Andrückbereich elastisch im wesentlichen quer zur Entnahmerichtung, in Richtung weg vom Stapel ausgelenkt sein. Um trotz dieser Auslenkung noch den Stapel zurückhalten zu können, so dass er der Bewegung des zu vereinzelnden Stapelgutelements nicht folgt, kann der Andrückbereich in einer vorteilhaften Ausgestaltung in der Vereinzelungsstellung sowohl an dem zu vereinzelnden als auch an dem nunmehr letzten Stapelgutelements des Stapels anliegen. Auf diese Weise wird der Stapel stets vom Andrückbereich gehalten.

Sind die von der Halteeinrichtung auf den Stapel ausgeübten Andrückkräfte zu gross, so können insbesondere empfindliche Stapelgutelemente beschädigt werden. Die Andrückkräfte können gemäss einer vorteilhaften Ausgestaltung der Erfindung verringert werden, wenn der Andrückbereich einen Haltevorsprung aufweist, der in der Haltestellung das in der Entnahmeeinrichtung letzte Stapelgutelement des Stapels untergreift, wodurch der Stapel wenigstens teilweise durch Formschluss gehalten werden kann. Ein solcher Haltevorsprung kann in Form einer Nase, eines Zahnes oder einer Schneide ausgestaltet sein.

Um das zu vereinzelnde Stapelgutelement vom restlichen Stapel zuverlässig zu trennen, kann der Andrückbereich einen in Entnahmevorrichtung vor dem Haltevorsprung liegenden Trennvorsprung aufweisen, der in der Vereinzelungsstellung zwischen das zu vereinzelnde Stapelgutelement und das nunmehr letzte Stapelgutelement des Stapels ragt. Vorzugsweise wird dabei der Trennvorsprung selbsttätig durch die Bewegung der Halteeinrichtung von der Haltestellung in die Vereinzelungsstellung zwischen das zu vereinzelnde Stapelgutelement in das nunmehr letzte Stapelgutelement des Stapels hineinbewegt. Dabei kann der Trennvorsprung in der Haltestellung vom Stapel beabstandet angeordnet sein. Im Gegensatz zu den aus dem Stand der Technik bekannten gegenüberliegenden, hin und her bewegten Schneiden sind der Haltevorsprung und der Trennvorsprung auf der gleichen Seite des Stapels angeordnet.

Der Haltevorsprung und der Trennvorsprung können als Teil einer Verzahnung ausgebildet sein, die beispielsweise an der Umfangsfläche eines Drehkörpers, wie einer Rolle oder einer Walze, ausgeformt ist. Der Zahnabstand zwischen den Zähnen der Verzahnung entspricht dabei vorteilhafterweise einem ein- oder ganzzahligen Vielfachen des Abstands der einzelnen Stapelgutelemente im Stapel, so dass durch die Abrollbewegung des Drehkörpers bei der Entnahme des zu vereinzelnden Stapelgutelements vom Stapel die Zähne jeweils der Reihe nach als Haltevorsprung und Trennvorsprung in den als Zahnstange anzusehenden Stapel eingreifen. Im Zuge der Drehbewegung wandert der Andrückbereich dabei über die Umfangsfläche und umfasst nacheinander die gesamte Verzahnung.

Insbesondere kann der Andrückbereich an einem im wesentlichen zahnradförmigen Drehkörper ausgebildet sein, der über ein Federelement, beispielsweise eine Blattfeder, gehalten ist.

Zur Aufnahme des Stapels kann ein Stapelkanal vorgesehen sein, dessen der Halteeinrichtung bezüglich des Stapels gegenüber liegende Wand als Gegenhaltemittel dient, indem der Stapel durch die Halteeinrichtung gegen diese Wand gedrückt und durch Reibungskräfte gehalten wird.

Gemäss einer vorteilhaften Weiterbildung kann die Halteeinrichtung als eine separat montierbare Einheit ausgestaltet sein, mit der auch bereits vorhandene Separierungsvorrichtungen nachgerüstet werden.

Um den Ort des entnahmeseitigen Endes des Stapels in der Separierungsvorrichtung genau einstellen zu können, kann die Halteeinrichtung in Entnahmerichtung relativ zum Stapel verschieblich ausgebildet sein.

Zur Vereinzelung kann die Separierungsvorrichtung ferner eine in Entnahmerichtung bewegliche Entnahmevorrichtung aufweisen, die mit einer an das zu vereinzelnde Stapelgutelement anlegbaren Unterdruckkammer versehen ist. Bei dieser Ausgestaltung bewegt sich die Entnahmevorrichtung zu dem entnahmeseitigen Ende des Stapels, saugt das zu vereinzelnde Stapelgutelement an und transportiert es vom Stapel weg zu den nachfolgenden Verfahrensschritten. Durch die Unterdruckansaugung ist ein sicherer Transport der Stapelgutelemente möglich, ohne dass mechanische Beschädigungen auftreten.

### KURZE ERLÄUTERUNG DER FIGUREN

Im Folgenden wird die Erfindung anhand einer Ausführungsform mit Bezug auf die Zeichnungen beispielhaft erläutert.

Es zeigen:
- Fig. 1: einen schematischen Längsschnitt durch eine Ausführungsform der Separierungsvorrichtung in einer Haltestellung;
- Fig. 2: ein Detail II der Fig. 1;
- Fig. 3: einen schematischen Längsschnitt durch die Ausführungsform der Fig. 1 in einer Vereinzelungsstellung;
- Fig. 4: ein Detail IV der Fig. 3;
- Fig. 5: einen schematischen Längsschnitt durch die Ausführungsform der Fig. 1 in einer Haltestellung mit vereinzeltem Stapelgutelement.;
- Fig. 6: einen schematischen Längsschnitt durch eine weitere Ausführungsform der Separierungsvorrichtung in einer Haltestellung ;
- Fig. 7: einen schematischen Längsschnitt gem. Fig. 6, wobei in diesem Fall zwei Stapel mit Separierungseinrichtung nebeneinander abgebildet sind sowie entsprechende Stopper zur Stapeldosierung ; und
- Fig. 8: eine Aufsicht auf eine ganze Batterie von Stapeln gemäss den Figuren 6 respektive 7.

### WEGE ZUR AUSFÜHRUNG DER ERFINDUNG

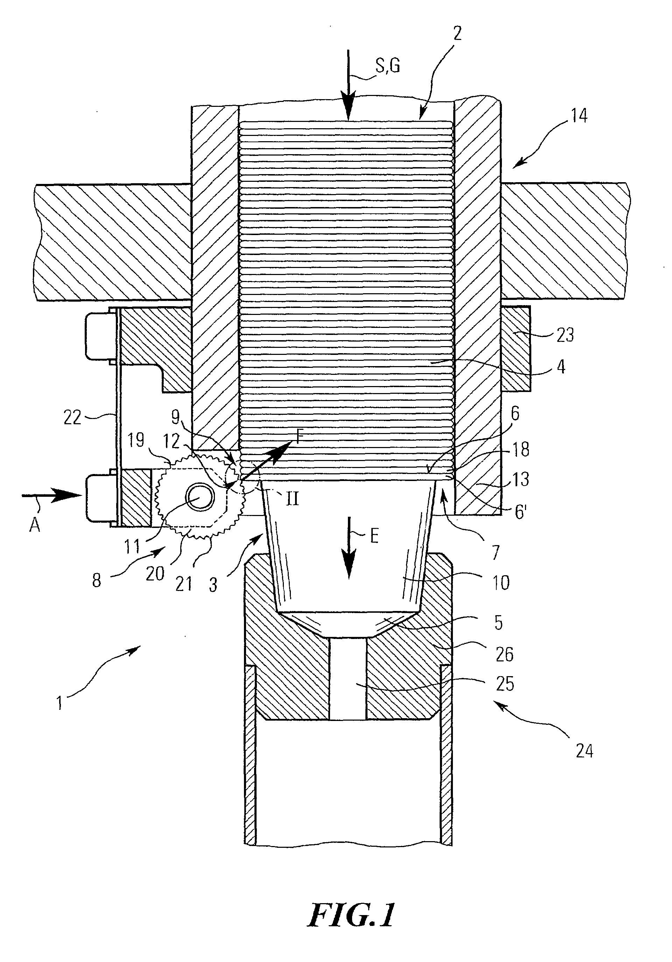

Zunächst wird mit Bezug auf die Fig. 1 der Aufbau einer Ausführungsform einer erfindungsgemässen Separierungsvorrichtung beispielhaft beschrieben. Dabei können einzelne, im Zusammenhang mit dieser Ausführungsform beschriebene Merkmale auch weggelassen werden, wenn der Fachmann auf die mit diesen Merkmalen verbundenen, in der Beschreibungseinleitung erwähnten Vorteile verzichten kann.

Fig. 1 zeigt eine Separierungsvorrichtung 1, durch die in einem Stapel 2 angeordnete, im wesentlichen becher- oder napfförmige Stapelgutelemente 3 in einer Entnahmerichtung E vereinzelt werden. Bei der Ausführungsform der Fig. 1 sind als Stapelgutelemente 3 aus Aluminium gezogene Kaffeepulver-Kapseln mit einer Höhe von ca. 3 cm gezeigt.

Die Stapelgutelemente 3 weisen einen im wesentlichen zylindrischen Behälterabschnitt 4 auf, der sich zylindrisch in Stapelrichtung S erstreckt, und von einem in Stapelrichtung vorspringenden, konkaven Bodenbereich 5 verschlossen wird. Die Stapelgutelemente 3 sind in Stapelrichtung S mit ihren Behälterabschnitten ineinander geschoben und liegen an einer Auflagefläche 6 im Stapel aufeinander. Wie bei der Ausführungsform der Fig. 1 zu erkennen ist, kann die Auflagefläche 6 von einem um den Aufnahmebereich 4 herumlaufenden flanschförmigen Kragen 6' gebildet sein. Die Auflagefläche kann jedoch auch andere Formen aufweisen, oder den Bodenabschnitt 5 umfassen.

Die Stapelrichtung S verläuft bei der Ausführungsform der Fig. 1 parallel zur Schwerkraftrichtung G. Das Gewicht des Stapels 2 beträgt dabei zwischen 25 N bis 50 N, im Mittel etwa um 30 N.

An dem in Stapelrichtung S bzw. Schwerkraftrichtung G gelegenen Entnahmeende 7 des Stapels 2 ist eine Halteeinrichtung 8 angeordnet, durch die der Stapel 2 entgegen der Entnahmerichtung E zurückgehalten ist. Die Halteeinrichtung 8 verhindert in der Haltestellung, dass der Stapel 2 ohne weiteres durch das Entnahmeende 7 gezogen werden kann.

Die Halteeinrichtung 8 weist einen Andrückbereich 9 auf, der in der in Fig. 1 dargestellten Haltestellung in einer Andrückrichtung A elastisch gegen den Stapel gedrückt ist. Wie in der Fig. 1 zu erkennen ist, verläuft die Andrückrichtung A dabei im wesentlichen quer zur Entnahmerichtung E.

Der Andrückbereich 9 untergreift ferner in der Haltestellung das in Entnahmerichtung E letzte, als nächstes zu vereinzelnden Stapelgutelement 10 des Stapels 2, ragt also an der am Entnahmeende 7 herrschenden Stapelrichtung S in die in diese Richtung projizierte Grundfläche des Stapels 2 hinein.

Der Andrückbereich 9 ist um eine Drehachse 11 relativ zum Stapel 2 drehbar an der Separierungsvorrichtung 1 gehalten. Die Drehachse 11 verläuft dabei im wesentlichen quer zur Entnahmerichtung E. Ferner ist die Drehachse 11 in Entnahmerichtung E unterhalb des Einleitungsortes 12 der durch die Halteeinrichtung erzeugten Andrückkraft F in den Stapel 2 angeordnet.

Aus dieser Anordnung ergibt sich eine in der Fig. 1 schematisch angedeutete Richtung der Andrückkraft F, die wenigstens eine quer zur Stapelrichtung S weisende Komponente besitzt und auch eine in Stapelrichtung S verlaufende Komponente aufweisen kann. Die in Stapelrichtung S weisende Komponente der Andrückkraft F entspricht dem Gewicht des Stapels, so dass der Stapel nicht durch die Halteeinrichtung 8 durchrutschen kann.

Der quer zur Stapelrichtung S gerichtete Teil der Andrückkraft F wird durch ein Gegenhaltemittel, das bezüglich des Stapels 2 gegenüber der Haltevorrichtung 8 angeordnet ist, aufgefangen. Wie in Fig. 1 dargestellt ist, kann dieses Gegenhaltemittel von einer Wand 13 eines Stapelschachtes 14 gebildet sein. Alternativ kann auch gegenüberliegend der Haltevorrichtung 8 eine weitere Haltevorrichtung 8, deren quer zur Stapelrichtung S weisende Andrückkraft die Andrückkraft der Haltevorrichtung 8 aufhebt, angeordnet sein. Es können auch mehrere Halteeinrichtungen 8 am Entnahmeende 7 des Stapels 2 in Umfangsrichtung so verteilt angeordnet sein, dass sich ihre Andrückkräfte quer zur Stapelrichtung gegeneinander aufheben. So können problemlos auch unterschiedlichste Geometrien von Behältern abgestapelt werden.

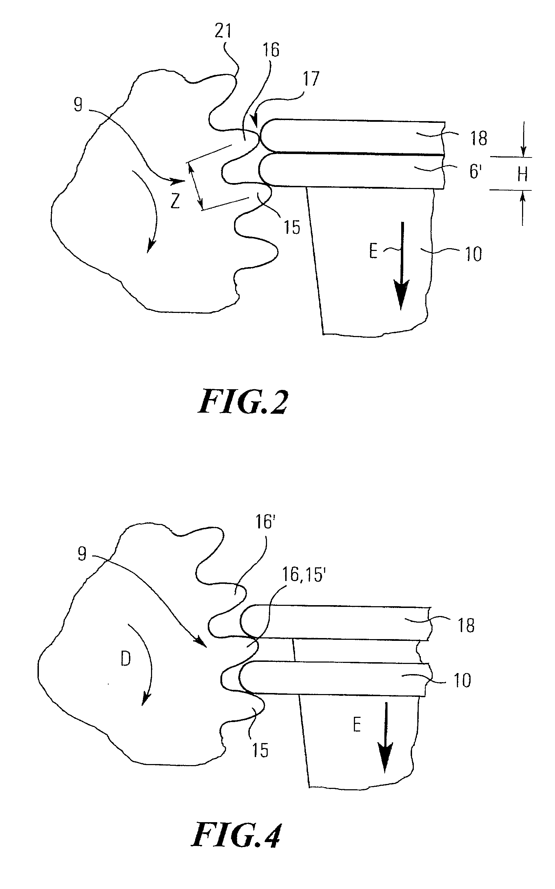

In Fig. 2 ist das Detail II um den Andrückbereich 9 herum schematisch vergrössert dargestellt. Dabei ist zu erkennen, dass der Andrückbereich 9 einen nasen- oder zahnförmigen Haltevorsprung 15 aufweist, der in der Haltestellung das in Entnahmerichtung E letzte Stapelgutelement 10 untergreift.

Ferner weist der Andrückbereich 9 einen in Entnahmerichtung E vor dem Haltevorsprung 15 liegenden, ebenfalls nasen- oder zahnförmigen Trennvorsprung 16 auf, der dem Spalt 17 zwischen dem letzten Stapelgutelement 10 des Stapels 2, das im nächsten Verfahrensschritt vereinzelt wird, und dem vorletzten Stapelgutelement 18 des Stapels 2 zugeordnet ist.

In Fig. 1 ist zu erkennen, dass der Andrückbereich 9 von wenigstens einem Abschnitt der Umfangsfläche 19 eines Drehkörpers 20 gebildet ist. Die Umfangsfläche 19 des Drehkörpers 20 ist mit einer Verzahnung 21 versehen, die den Trennvorsprung 16 und den Haltevorsprung 15 ausbildet. Der Zahnabstand Z, wie insbesondere in der Fig. 2 zu erkennen ist, entspricht dabei einem ganzzahligen Vielfachen des Abstands H zweier Stapelgutelemente 4 im Bereich des Andrückbereichs 9. Insbesondere kann der Abstand Z zwischen dem Haltevorsprung 15 und dem Trennvorsprung 16 in Umfangrichtung der Umfangsfläche 19 genau dem Abstand H in Stapelrichtung zwischen zwei aufeinanderfolgenden Spalten 17, die von den Auflageflächen 6 gebildet werden bzw. der Dicke des Kragens 6' in Stapelrichtung S, entsprechen.

Bei der Ausführungsform der Fig. 1 bildet der Drehkörper 20 ein Zahnrad. Das Zahnrad ist vorzugsweise aus einem verschleissfesten Kunststoff, wie beispielsweise Polyamid oder ABS gefertigt und kann auch verstärkende Fasermaterialien, wie Glasfasern, enthalten. Auch Keramiken können verwendet werden.

Der Durchmesser des Zahnrades 20 richtet sich dabei neben mit dem Abstand der Drehachse 11 unterhalb des Einleitungsortes der Andrückkraft A nach dem Gewicht des Stapels sowie der Festigkeit der Stapelgutelemente: Durch die Veränderung der Lage der Drehachse und des Durchmessers des Zahnrades kann sowohl die Auslenkung bzw. das Mass der Untergreifung des letzten Stapelgutelements 10 als auch die Richtung der Andrückkraft A eingestellt werden.

Die Andrückkraft F wird durch eine in der Haltestellung ausgelenkte Blattfeder 22 erzeugt. Die Blattfeder 22 ermöglicht eine Bewegung des Andrückbereichs 9 in eine Richtung im wesentlichen quer zur Entnahmerichtung E.

Bei der Separierungsvorrichtung 1 kann die Lage des Entnahmeendes 7 im Stapelkanal 14 genau festgelegt werden. Hierzu ist die Halteeinrichtung 8 über einen weitenverstellbaren, den Stapelkanal 14 umgebenden Ring, am im wesentlichen rohrförmigen Stapelkanal 14 angebracht.

Die Halteeinrichtung 8 bildet ferner eine bauliche Einheit, mit der auch bereits bestehende Separierungsvorrichtungen 1 bzw. bestehende Stapelkanäle 14 nachgerüstet werden können. Die Geometrie des Ringes 23 muss dazu lediglich an die Geometrie der vorhandenen Anlage angepasst werden.

Die Separierungsvorrichtung 1 umfasst ausserdem eine in Entnahmerichtung E bewegliche Entnahmevorrichtung 24, die eine an das letzte Stapelgutelement 10 anlegbare Unterdruckkammer 25 an einem Saugkopf 26 aufweist.

Im Folgenden wird die Funktion der Ausführungsform der Fig. 1 ausgehend von der Haltestellung der Separierungsvorrichtung 1 beschrieben.

Um den Stapel 2 mit den Stapelgutelementen 4 zu vereinzeln, wird jeweils das in Stapelrichtung S gelegene letzte Stapelgutelement 10 vom Stapel 2 abgezogen. Dieses Stapelgutelement wird im Folgenden als zu vereinzelndes Stapelgutelement bezeichnet.

Um das zu vereinzelnde Stapelgutelement 10 vom Stapel 2 abzuziehen, wird der Saugkopf 26 an den Bodenbereich 5 des zu vereinzelnden Stapelgutelements 10 herangefahren und die Unterdruckkammer 25 mit einem Unterdruck beaufschlagt. Dadurch wird das zu vereinzelnde Stapelgutelement 10 an den Saugkopf 26 gesaugt.

Dann wird der Saugkopf 26 mit dem daran gehaltenen, zu vereinzelnden Stapelgutelement 10 in Entnahmerichtung E vom Stapel 2 weg bewegt. Bei dieser Bewegung muss das zu vereinzelnde Stapelgutelement am Andrückbereich 9 vorbei transportiert und vom restlichen Stapel 2, insbesondere vom vorletzten Stapelgutelement 18, getrennt werden. Hinderlich ist bei der Trennung der Stapelgutelemente 10 und 18, dass beim Auseinanderziehen der Stapelgutelemente im Bereich der ineinander geschobenen Aufnahmebereiche 4 ein Unterdruck erzeugt wird, der die Stapelgutelemente zueinander saugt und der Trennung entgegenwirkt.

Bei der Vereinzelung bewegt sich daher zunächst der gesamte Stapel 2 zusammen mit dem zu vereinzelnden Stapelgutelement 10 in Entnahmerichtung E, wobei der das zu vereinzelnde Stapelgutelement 10 untergreifende Andrückbereich 9 quer zur Entnahme E elastisch weggedrückt wird. Durch die drehbare Lagerung des Aufnahmebereichs 9 an der Drehachse 11 bewegt sich der Aufnahmebereich 9 in Entnahmerichtung E während der Auslenkung mit der Bewegung des zu vereinzelnden Stapelgutelements 10 mit. Diese Bewegung wird dadurch unterstützt, dass das zu vereinzelnde Stapelgutelement 10 in Entnahmerichtung E gegen den Haltevorsprung 15 der Verzahnung 21 drückt (vgl. Fig. 2) und so ein Moment um die Drehachse 11 erzeugt.

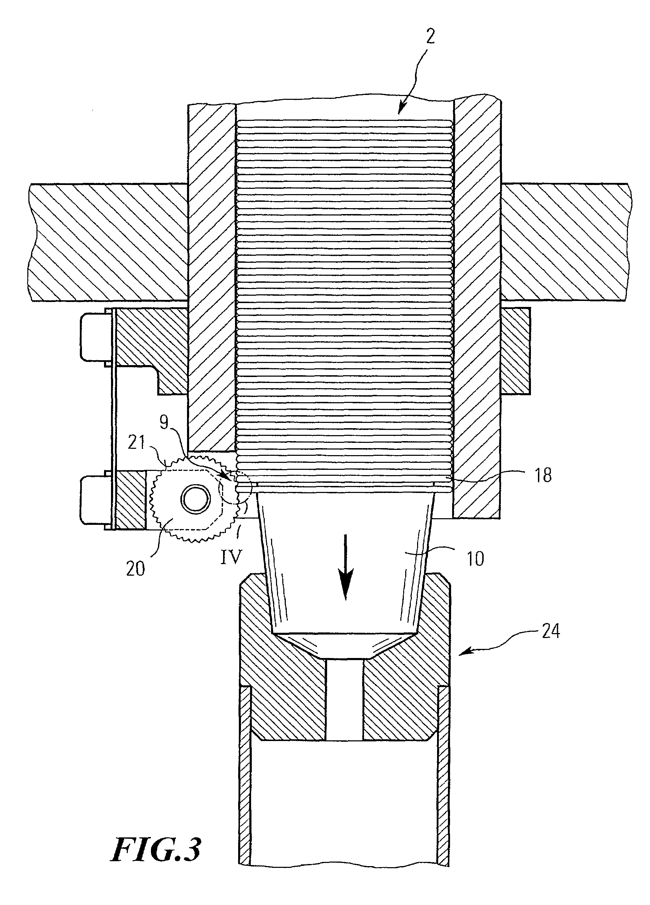

Durch die dadurch ausgelöste Drehbewegung des Andrückbereichs 9, die in Fig. 2 schematisch durch den Pfeil D dargestellt ist, wird bei der Auslenkbewegung zwangsläufig der Trennvorsprung 16 in den Spalt 17 bewegt, bis er in der in den Figuren 2 und 3 schematisch dargestellten Vereinzelungsstellung so in den Spalt 17 eingreift, dass er das zu vereinzelnde Stapelgutelement 10 vom bis zu diesem Augenblick vorletzten und nunmehr letzten Stapelgutelement 18 trennt. In der Vereinzelungsstellung untergreift der Trennvorsprung 16 das nunmehr letzte Stapelgutelement 18, während der Haltevorsprung 15 noch das zu vereinzelnde Stapelgutelement 10 untergreift. Im Zuge der weiteren Drehbewegung D des Andrückbereichs 9 wird der Trennvorsprung 16 zu einem neuen Haltevorsprung 15' für den nächsten Vereinzelungsvorgang. Der in Entnahmerichtung E vor dem Trennvorsprung 16 gelegene Vorsprung 16' wird im Zuge der Weiterdrehung des Andrückbereichs 9 in die nächste Haltestellung zum neuen Trennvorsprung für den nächsten Vereinzelungsvorgang.

Die Weiterdrehung D des Andrückbereichs 9 bzw. Drehkörpers 20 bis zur erneuten Einnahme der Haltestellung erfolgt zum einen durch die weitere Entnahmebewegung des zu vereinzelnden Stapelgutelements 10, die durch die Entnahmevorrichtung 24 bewirkt wird, zum anderen durch das Eigengewicht des Stapels 2.

Auf diese Weise gelangt die gesamte Verzahnung des Zahnrades 20 allmählich in Eingriff mit jeweils dem letzten Stapelgutelements 10 des Stapels 2, so dass der Andrückbereich 9 allmählich um die Umfangsfläche des Zahnrades 20 wandert.

In Fig. 5 ist ein Zustand der Separierungsvorrichtung 1 gezeigt, in dem der Vereinzelungsprozess abgeschlossen und erneut die Haltestellung eingenommen ist. Das zu vereinzelnde Stapelgutelement 10 ist vom Andrückbereich 9 gelöst und in Entnahmerichtung E vom Stapel 2 entfernt worden. Zur Entfernung des nunmehr letzten Stapelgutelements 18 beginnt der Entnahmezyklus mit der in der Fig. 1 beschriebenen Halterstellung von Neuem.

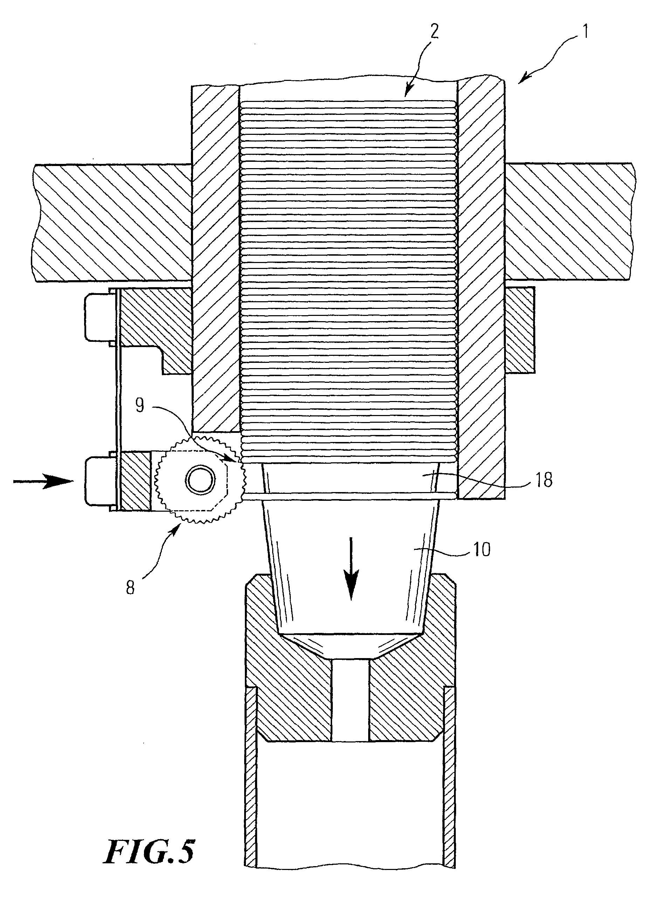

Die Separierungsvorrichtung 1 der Figuren 1 bis 5 ist insbesondere für eine Vereinzelung des Stapels 2 mit sehr hohen Geschwindigkeiten geeignet, wie sie bei der Herstellung der Stapelgutträger 4 benötigt wird. So können die Stapelgutträger 4 nach der Vereinzelung noch weiteren Bearbeitungsschritten, wie beispielsweise der Auskleidung mit flüssigkeitsabsorbierenden oder rissdichtenden Materialien unterzogen werden, bevor sie erneut gestapelt und verschickt werden. Die Separierungsvorrichtung 1 ist auch zur Entstapelung vor der Befüllung der Stapelgutelemente 4 mit beispielsweise Kaffeepulver und deren nachfolgenden Versiegelung durch eine Folie geeignet.

Auch für langsamere Anwendungen ist die Separierungsvorrichtung 1 geeignet, beispielsweise zur Ausgabe von Getränkebechern.

Bei der beschriebenen Ausfiihrungsform verläuft die Stapelrichtung S geradlinig parallel zur Gewichtskraft G und zur Entnahmerichtung E. Es sind jedoch auch gekrümmte Stapelkanäle 14 möglich, so dass die Stapelrichtung S lokal variiert. In diesem Fall wird ein Teil der Gewichtskraft von den Wänden 13 des Stapelkanals 14 aufgenommen. Das Funktionsprinzip der erfindungsgemässen Separierungsvorrichtung bleibt allerdings unverändert.

Auch kann die elastische Andrückkraft F durch anders ausgestaltete Federelemente als die dargestellte Blattfeder 22 erzeugt werden. Das Federelement 22 muss lediglich zwischen dem Einleitungsort der Andrückkraft F und dem Gehäuse der Separierungsvorrichtung 1 angeordnet sein und eine Querbewegung des Andrückbereichs 9 quer zur Entnahmerichtung E ermöglichen.

Schliesslich können anstelle des Zahnrades 9 auch andere Verzahnungsformen Anwendung finden, bei denen im Zuge der Entnahmebewegung E ein Trennvorsprung zwischen das jeweils zu vereinzelnde Stapelgutelement 10 und das in Entnahmerichtung E davor liegende Stapelgutelement 18 bewegt und ein Haltevorsprung quer zur Entnahmerichtung ausgelenkt wird.

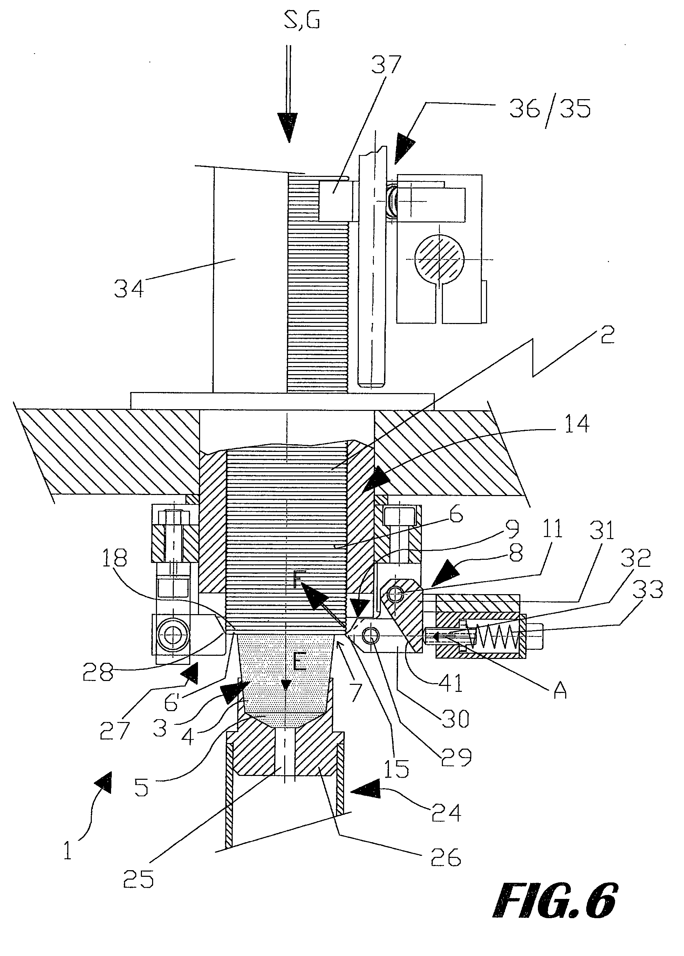

Ein weiteres Ausführungsbeispiel der vorliegenden Erfindung ist in den Figuren 6, 7 und 8 dargestellt. Fig. 6 zeigt eine schematische Darstellung einer einzelnen Separierungsvorrichtung 1. Wiederum wird das zu vereinzelnde in diesem Fall unterste Stapelgutelement 10 von einem Stapel 2 unter Zuhilfenahme einer Entnahmevorrichtung 24 nach unten weggezogen. Dabei umgreift ein Saugkopf 26 der Entnahmevorrichtung 24 den unteren Teil des untersten Stapelgutelementes 10 und über eine Unterdruckkammer 25 wird das Stapelgutelement 10 derart an die Entnahmevorrichtung 24 angesaugt, dass die durch die Halteeinrichtung 8 gewährleistete Gegenkraft überwunden werden kann, und das Stapelgutelement 10 über ein Abziehen vereinzelt werden kann.

Der Stapel 2 befindet sich wiederum in einem Stapelschacht 14. Am unteren Ende dieses Stapelschachtes 14 ist die Halteeinrichtung 8 angeordnet, und dieser gegenüber ein Gegenhaltemittel 27. Die Haltevorrichtung 8 umfasst in diesem Fall ein Halteelement, welches aus einem ersten Element 31 und einem zweiten Element 30 gebildet wird. Das erste Element 31 ist über eine Drehachse 11, welche senkrecht zur Stapelrichtung S und in diesem Fall senkrecht zur Papierebene angeordnet ist, und welche eine Beweglichkeit des ersten Elements 31 oder ersten Arms 31 erlaubt. Diese Beweglichkeit besteht in einer Verschwenkbarkeit im Gegenuhrzeigersinn. An diesem ersten Element 31 über eine Gegendrehachse 29, welche im wesentlichen parallel zur Drehachse 11 angeordnet ist, drehbar angeschlagen ist das zweite Element 30, welches transversal zur Stapelrichtung angeordnet ist. Die dem Stapel zugewandte Spitze des zweiten Elements 30 bildet den Haltevorsprung 15, welcher vor der Vereinzelung den Bördelrand 6' des untersten, zu vereinzelnden Stapelgutelementes 10 untergreift. Das zweite Element 30 ist aber um die Gegendrehachse 29 nicht vollständig drehbar, sondern es ist vielmehr am ersten Element 31 eine Gegendruckfläche 41 vorgesehen, welche dazu führt, dass das zweite Element 30 bei einem Anliegen einer Kraft am Haltevorsprung 15 in Entnahmerichtung E in seiner horizontalen Lage und relativ zum ersten Element 31 fixiert ist (keine weitere Drehbarkeit im Gegenuhrzeigersinn). Liegt andererseits am Haltevorsprung 15 eine Kraft entgegen der Entnahmerichtung E an, wie dies beispielsweise dann auftritt, wenn von unten in einer Ausnahmesituation ein Stapelgutelement über die Entnahmevorrichtung 24 zurück an den Stapel 2 gepresst wird, so kann das zweite Element 30 um die Gegendrehachse 29 relativ zum ersten Element 31 im Uhrzeigersinn abdrehen und damit den Haltevorsprung 15 gewissermassen nach oben vom Stapel 2 weg ausweichen lassen. Über eine Feder oder über entsprechende Einstellung der Hebel- respektive Gewichtskraft am zweiten Element 30 sollte sichergestellt werden, dass nach einer Auslenkung im Uhrzeigersinn das zweite Element 30 selbsttätig wieder im Gegenuhrzeigersinn in seine horizontale Position zurückfällt und damit nach einer derartigen Situation den Stapel 2 wieder in Entnahmerichtung E sichern kann.

Das gesamte Halteelement aus erstem Element 31 und zweitem Element 30 wird über eine Druckfeder 33 gegen den Stapel 2 gedrückt. Es handelt sich bei der Druckfeder um eine handelsübliche Druckfeder aus Federstahl mit einem Aussendurchmesser von 7,6 mm, einem Drahtdurchmesser von 0,5 mm und einer Länge von 23 mm. Im Vergleich zum weiter oben angegebenen Ausführungsbeispiel kann dieses Ausführungsbeispiel durch die Einstellbarkeit der Andrückkraft über die Druckfeder 33 wesentlich flexibler auf unterschiedliche Bedingungen eingestellt werden. Die Federkraft wird über einen Gegendruckstift 32, welcher in einem zylindrischen Gehäuse zusammen mit der Feder geführt ist, an das Halteelement 30, 31 übertragen.

Gegenüber der Haltevorrichtung 8 befindet sich ein Gegenhaltemittel 27. Das Gegenhaltemittel 27 verfügt über einen kleinen Vorsprung 28, welcher vor der Vereinzelung ebenfalls den Bördelrand des zu vereinzelnden untersten Stapelgutelementes 10 untergreift. Damit wird eine optimale Halterung dieses Stapelgutelementes 10 gewährleistet. Wenn dieses unterste Stapelgutelement 10 von der Entnahmevorrichtung 24 abgezogen wird, weicht der Bördelrand 6' diesem Vorsprung 28 leicht in Richtung der Haltevorrichtung 8 aus, was bedeutet, dass für ein Funktionieren der Vereinzelung dieser Vorsprung 28 nicht zu gross sein darf.

Typischerweise muss von der Haltevorrichtung 8 respektive dem gegenüber angeordneten Gegenhaltemittel 27 ein Schachtgewicht von im Bereich von 40 N aufgenommen werden. Um dies zu gewährleisten, und um zu verhindern, dass beispielsweise beim Nachschieben von weiteren Stapelgutelementen in den Schacht 14 auf Grund einer plötzlich erhöhten Gewichtskraft auf dem Stapel Stapelgutelemente unten aus dem Stapel 2 unkontrolliert herausgleiten, sind ausserdem Mittel angeordnet, welche für eine konstante Belastung auf der Haltevorrichtung 8 sorgen.

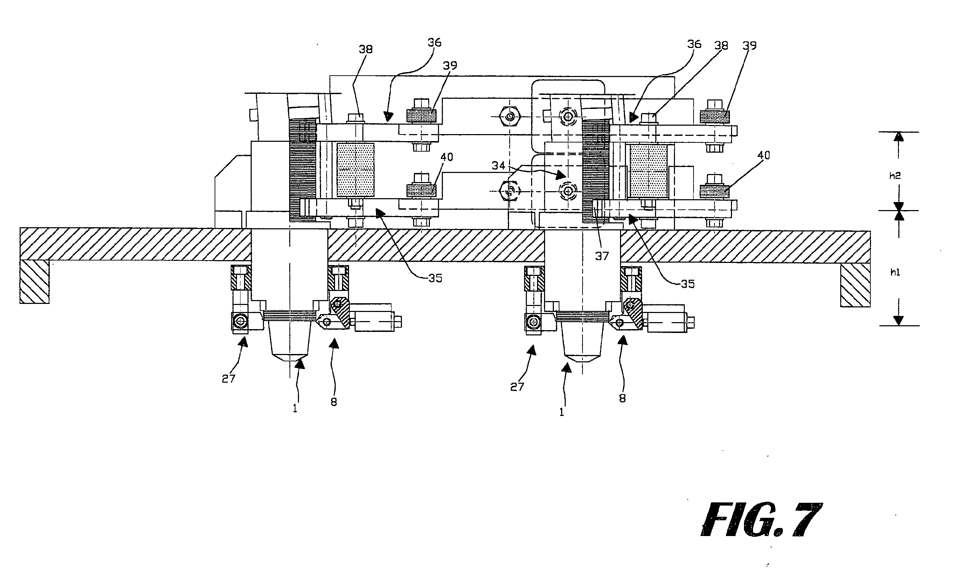

In Fig. 6 sind diese so genannten Stopper 35/36 nur schematisch dargestellt, und zu einer genaueren Illustration von deren Funktionsweise wird auf Fig. 7 verwiesen. Es sind 2 derartige Stopper vorhanden, nämlich ein unterer Stopper 35 und ein oberer Stopper 36. Die Stopper verfügen an ihrer dem Stapel zugewandten Spitze über einen Gegendruckgummi 37, welcher in seinem Andrückbereich an den Stapel 2 in Stapelrichtung S eine Breite aufweist, dass jeweils mehrere Bördelränder 6' gleichzeitig erfasst werden. Es handelt sich dabei um einen weichen Gummi von beispielsweise ca. 50 Schorr. Im Bereich der Stopper 35/36 ist der Stapelschacht 14 nicht über den gesamten Umfang ausgebildet, sondern der obere Stapelschacht 34 besteht nur aus einem den beiden Stopper gegenüberliegenden Halbzylinder. Die Innenfläche dieses oberen Stapelschachtes 34 dient als Gegendruckfläche für die Stopper. Die Stopper sind über Schwenkachsen 38 derart angelenkt, dass sie über entsprechend zugeordnete Schieber 39 und 40 mit ihren Gegendruckgummis 37 gegen den Stapel 2 gedrückt werden können. Der obere Stopper 36 dient dem eigentlichen Stapelfeeding, der untere Stopper dient der Stapeldosierung. Diese Funktion wird gewährleistet, indem die beiden Stopper 35 und 36 den Stapel 2 alternierend fixieren.

Im Rahmen eines einzigen Vereinzelungstaktes liegt beispielsweise zwischen 0 bis 130 Grad der Stopper 36 am Stapel 2, während der unterer Stoppe 35 nicht am Stapel 2 anliegt und den Stapel zur Haltevorrichtung 8 nachrutschen lässt, wenn das zu vereinzelnde Element abgezogen wird.

Zwischen 130 bis 360 Grad eines Vereinzelungstaktes vertauschen die beiden Stopper ihre Position, und der untere Stopper 35 wird an den Stapel 2 gepresst während der obere Stopper 36 den Stapel 2 freigibt. In dieser Position rutscht der gesamte, oberhalb des unteren Stoppers 35 angeordnete Stapel nach, dies aber ohne dass eine entsprechende erhöhte Kraft an der Haltevorrichtung 8 anliegt. Durch diese wechselseitige Halterung des Stapels durch die Stopper 35 respektive 36 wird gewährleistet, dass die an der Haltevorrichtung anliegende und aufzunehmende Schachtgewichtskraft stets im Bereich von ca. 40 N bleibt. Es ist auch möglich die beiden Stopper 35 und 36 nicht im Rahmen eines einzigen Vereinzelungstaktes alternierend zulassen, sondern im Rahmen von beispielsweise 5 oder 10 Takten abwechselnd den Stapel fixieren zu lassen.

Die in Fig. 7 angegebene Höhe h1 zwischen Haltevorrichtung 8 und unterem Stopper 35 beträgt typischerweise ca. 80 mm und jene zwischen den beiden Stoppern (h2) ca. 50 bis 60 mm. Damit lastet auf der Haltevorrichtung 8 typischerweise ein Stapel von im Bereich von 80 Stapelgutelementen.

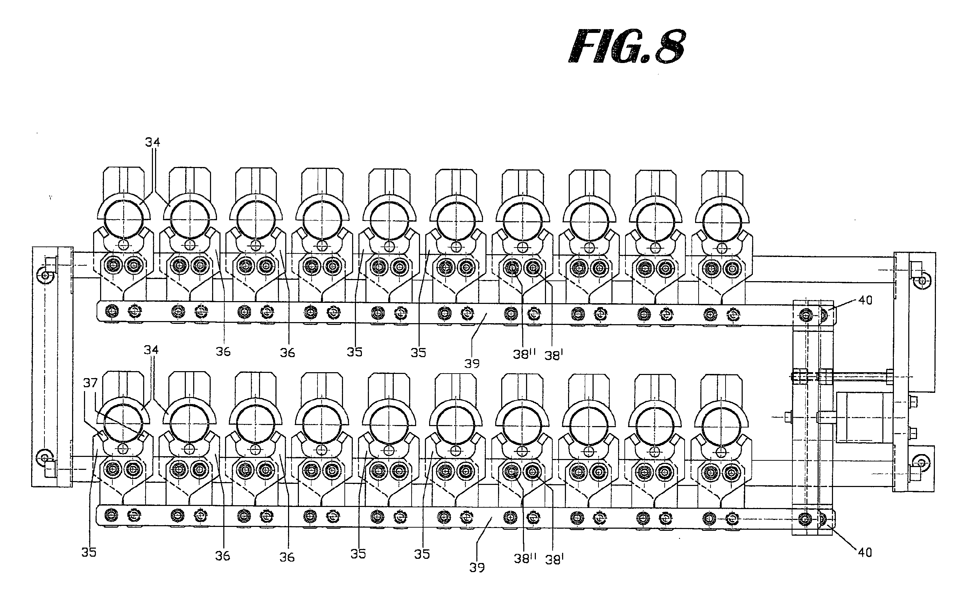

In Fig. 8 ist abschliessend noch eine ganze Doppelkolonne von insgesamt 20 Stapeln von oben dargestellt. In dieser Darstellung wird ersichtlich, wie der obere Stapelschacht halbkreisförmig ausgebildet ist, und wie die beiden Stopper 35 und 36 jeweils in um ca. 120 Grad versetzten Positionen den Stapel fixieren. Die beiden Stopper sind über unterschiedliche Schwenkachsen drehbar gelagert, wobei eine erste Schwenkachse 38' jeweils dem oberen Stopper 36 zugeordnet ist, und eine zweite Schwenkachse 38" dem unteren Stopper 35. Die beiden Achsen 38' und 38" sind parallel zueinander und parallel zur Stapelrichtung angeordnet. Die jeweiligen Schieber 39 und 40 sind übereinander angeordnet, und können im Prinzip unabhängig voneinander gesteuert werden. Die jeweiligen Schieber für die oberen Stopper 39 und für die unteren Stopper 40 werden für beide Reihen von Stapeln synchron über entsprechende Hebel gesteuert.

### BEZUGSZEICHENLISTE

- 1: Separierungsvorrichtung
- 2: Stapel
- 3: Stapelgutelemente
- 4: zylindrischer oder kegelstumpfförmiger Behälterabschnitt, Aufnahmebereich
- 5: konkaver Bodenbereich
- 6: Auflagefläche
- 6': flanschförmiger Kragen
- 7: Entnahmeende des Stapels
- 8: Halteeinrichtung
- 9: Andrückbereich
- 10: zu vereinzelndes Stapelgutelement
- 11: Drehachse
- 12: Einleitungsort
- 13: Wand
- 14: Stapelschacht
- 15: Haltevorsprung
- 16: Trennvorsprung
- 17: Spalt
- 18: vorletztes Stapelgutelement
- 19: Umfangsfläche
- 20: Drehkörper
- 21: Verzahnung
- 22: Blattfeder
- 23: Ring
- 24: Entnahmevorrichtung
- 25: Unterdruckkammer
- 26: Saugkopf
- 27: Gegenhaltemittel
- 28: Vorsprung am Gegenhaltemittel
- 29: Gegendrehachse
- 30: transversaler Arm der Halteeinrichtung
- 31: axialer, L-förmiger Arm der Halteeinrichtung
- 32: Gegendruckstift
- 33: Druckfeder
- 34: oberer Stapelschacht
- 35: unterer Stopper für Stapeldosierung
- 36: oberer Stopper für Stapelfeeding
- 37: Gegendruckgummi von 35 respektive 36
- 38: Schwenkachse von 35 und 36
- 39: Schieber für 36
- 40: Schieber für 35
- 41: Gegendruckfläche

- E: Entnahmerichtung
- S: Stapelrichtung
- G: Schwerkraftrichtung
- A: Andrückrichtung
- F: Andrückkraft
- Z: Zahnabstand
- H: Abstand zweier Stapelgutelemente
- D: Drehbewegung des Andrückbereichs
- h1: Höhe zwischen Andrückbereich und unterer Stopper
- h2: Höhe zwischen unterer Stopper und oberer Stopper

## Patentansprüche

1. Separierungsvorrichtung (1) zur Vereinzelung von in einem Stapel (2) angeordneten, im wesentlichen becher- oder napfförmigen Stapelgutelementen (4), wie Kaffeepulver-Kapseln, mit einer an einem Entnahmeende (7) des Stapels (2) angeordneten, den Stapel (2), gegen eine Entnahmerichtung (E) zurückhaltenden Halteeinrichtung (8),
**dadurch gekennzeichnet, dass**
die Halteeinrichtung (8) einen Andrückbereich (9) aufweist, der in einer Haltestellung in eine quer zur Entnahmerichtung (E) weisende Andrückrichtung (A) elastisch gegen den Stapel drückend ausgestaltet ist.

2. Separierungsvorrichtung (1) nach Anspruch 1, **dadurch gekennzeichnet, dass** die Halteeinrichtung (8) in der Haltestellung das in Entnahmerichtung (E) letzte Stapelgutelement (10) des Stapels (2) untergreift, wobei der Andrückbereich (9) bevorzugt einen Haltevorsprung (15) aufweist, der in der Haltestellung das in Entnahmerichtung (E) letzte Stapelgutelement (10) untergreift.

3. Separierungsvorrichtung (1) nach Anspruch 1 oder 2, **dadurch gekennzeichnet, dass** der Andrückbereich (9) um eine im wesentlichen quer zur Entnahmerichtung (E) verlaufende Drehachse (11) relativ zum Stapel (2) drehbar oder schwenkbar an der Separierungsvorrichtung (1) gehalten ist.

4. Separierungsvorrichtung (1) nach Anspruch 3, **dadurch gekennzeichnet, dass** die Drehachse (11) in der Haltestellung in Entnahmerichtung (E) hinter dem Einleitungsort (12) der Andrückkraft (F) angeordnet ist.

5. Separierungsvorrichtung (1) nach einem der Ansprüche 3 oder 4, **dadurch gekennzeichnet, dass** die Halteeinrichtung (8) ein um die Drehachse (11) schwenkbares Halteelement (30, 31) umfasst, an dessen dem Stapel (2) zugewandtem Ende ein Haltevorsprung (15) zum Untergreifen des letzten Stapelgutelements (10) angeordnet ist, wobei das Halteelement (30, 31) mit seinem Haltevorsprung (15) gegen den Stapel (2) drückend ausgestaltet ist, und gegen eine Rückstellkraft um die Drehachse (11) vom Stapel (2) weg ausgelenkt werden kann.

6. Separierungsvorrichtung (1) nach Anspruch 5, **dadurch gekennzeichnet, dass** die Rückstellkraft wenigstens mittelbar über eine Feder (33) gewährleistet wird.

7. Separierungsvorrichtung (1) nach einem der Ansprüche 5 oder 6, **dadurch gekennzeichnet, dass** das Halteelement (30, 31) ein erstes Element (31) umfasst, welches über die Drehachse (11) schwenkbar an der Separierungsvorrichtung (1) angeschlagen ist, und dass das Halteelement ein zweites Element (30) umfasst, an dessen dem Stapel (2) zugewandtem Ende der Haltevorsprung (15) angeordnet ist, wobei das zweite Element (30) über eine Gegendrehachse (29) schwenkbar am ersten Element derart befestigt ist, dass bei Anliegen einer Kraft am Haltevorsprung (15) im wesentlichen in Entnahmerichtung (E) das gesamte Halteelement (30, 31) um die Drehachse (11) ausgelenkt wird, und dass bei Anliegen einer Kraft am Haltevorsprung (15) im wesentlichen entgegen der Entnahmerichtung (E) das erste Element (31) im wesentlichen positionsstabil verbleibt und das zweite Element (30) um die Gegendrehachse (29) relativ zum ersten Element (31) abschwenkt, und damit der Haltevorsprung (15) dem Stapel (2) ausweicht.

8. Separierungsvorrichtung (1) nach Anspruch 7, **dadurch gekennzeichnet, dass** das erste Element (31) im wesentlichen L-förmig mit zwei Schenkeln ausgebildet ist, wobei der erste der beiden Schenkel parallel zur Stapelrichtung (S) angeordnet ist und die Drehachse (11) am der Entnahmerichtung (E) abgewandten Ende des ersten Schenkels angeordnet ist, wobei der zweite der beiden Schenkel des ersten Elements (31) zur Stapelachse (S) gerichtet ist und die Gegendrehachse (29) am dem Stapel (2) zugewandten Ende des zweiten Schenkels im wesentlichen parallel zur Drehachse (11) angeordnet ist, und wobei das zweite Element (30) bei einer Kraft am Haltevorsprung (15) im wesentlichen in Entnahmerichtung (E) im wesentlichen parallel zum zweiten Schenkel angeordnet ist.

9. Separierungsvorrichtung (1) nach einem der vorhergehenden Ansprüche, **dadurch gekennzeichnet, dass** im wesentlichen auf der der Halteeinrichtung (8) gegenüberliegenden Seite des Stapels (2) ein Gegenhaltemittel (29) angeordnet ist, welches bevorzugt einen Vorsprung (28) zum Untergreifen des letzten Stapelgutelements (10) aufweist.

10. Separierungsvorrichtung (1) nach einem der vorhergehenden Ansprüche, **dadurch gekennzeichnet, dass** Mittel (35-40) angeordnet sind, welche eine kontrollierte Stapeldosierung gewährleisten.

11. Separierungsvorrichtung nach Anspruch 10, **dadurch gekennzeichnet, dass** die Mittel (35-40) wenigstens zwei in Stapelrichtung (S) übereinander angeordnete, den Stapel kontrolliert in Entnahmerichtung (E) blockierende Stopper (35-37) umfassen, wobei die Stopper (35-37) in alternierender Weise den Stapel (2) derart zu blockieren respektive zu fördern in der Lage sind, dass die am Andrückbereich (9) anliegende Gewichtskraft des Stapels (2) nie einen Wert überschreitet, dass ohne aktives Greifen des zu vereinzelnden Stapelgutelements (10) keine Stapelgutelemente den Stapel (2) in Entnahmerichtung (E) verlassen.

12. Separierungsvorrichtung (1) nach einem der oben genannten Ansprüche,
**dadurch gekennzeichnet, dass** der Andrückbereich (9) im wesentlichen quer zur Entnahmerichtung (E) relativ zum Stapel (2) auslenkbar an der Haltevorrichtung (8) angeordnet ist.

13. Separierungsvorrichtung (1) nach einem der oben genannten Ansprüche, **dadurch gekennzeichnet, dass** der Andrückbereich (9) in einer Vereinzelungsstellung elastisch ausgelenkt ist und sowohl an dem zu vereinzelnden Stapelgutelement (10) als auch an dem nunmehr letzten Stapelgutelement (18) des Stapels (2) anliegt.

14. Separierungsvorrichtung (1) nach einem der oben genannten Ansprüche, **dadurch gekennzeichnet, dass** der Andrückbereich (9) einen in Entnahmerichtung (E) vor dem Haltevorsprung (15) liegenden Trennvorsprung (16) aufweist, der in der Vereinzelungsstellung zwischen das zu vereinzelnde Stapelgutelement (10) und das nunmehr letzte Stapelgutelement (18) des Stapels ragt, wobei insbesondere der Trennvorsprung (16) zwischen das zu vereinzelnde Stapelgutelement (10) und das nunmehr letzte Stapelgutelement (18) in den Stapel (2) beweglich ausgestaltet ist.

15. Separierungsvorrichtung (1) nach einem Ansprüche 13 oder 14, **dadurch gekennzeichnet, dass** der Andrückbereich (9) von wenigstens einem Abschnitt der Umfangsfläche eines Drehkörpers (20) gebildet ist, wobei bevorzugt die Umfangsfläche des Drehkörpers (20) wenigstens im Andrückbereich (9) eine Verzahnung (21) ausbildet, und wobei insbesondere bevorzugt ein Zahnabstand (Z) zwischen den Zähnen der Verzahnung einem ganzzahligen Vielfachen des Abstands (H) der Stapelgutelemente (4, 10, 18) im Stapel (2) entspricht.

16. Separierungsvorrichtung (1) nach einem der Ansprüche 13 bis 15, **dadurch gekennzeichnet, dass** der Andrückbereich (9) über eine Blattfeder (22) gehalten ist.

17. Separierungsvorrichtung (1) nach einem der oben genannten Ansprüche, **dadurch gekennzeichnet, dass** ein Stapelkanal (14) zur Aufnahme des Stapels (2) vorgesehen ist.

18. Separierungsvorrichtung (1) nach einem der oben genannten Ansprüche, **dadurch gekennzeichnet, dass** die Halteeinrichtung (8) als eine separat montierbare Einheit ausgestaltet ist.

19. Separierungsvorrichtung (1) nach einem der oben genannten Ansprüche, **dadurch gekennzeichnet, dass** die Halteeinrichtung (9) in Entnahmerichtung (E) verschieblich ausgebildet ist.

20. Separierungsvorrichtung (1) nach einem der oben genannten Ansprüche, **dadurch gekennzeichnet, dass** eine in Entnahmerichtung (E) bewegliche Entnahmevorrichtung (24) mit einer an das zu vereinzelnde Stapelgutelement (10) anlegbaren Unterdruckkammer (25) vorgesehen ist.

21. Verfahren zum Vereinzeln von in einem Stapel (2) angeordneten, im wesentlichen becher- oder napfförmigen Stapelgutelementen (4, 10, 18), **dadurch gekennzeichnet, dass** ein Andrückbereich (9) eine Halteeinrichtung (8) bei der Vereinzelung eines Stapelgutelements (10) von diesem Stapelgutelement (10) am Entnahmeende (7) des Stapels elastisch in eine Richtung quer zur Entnahmerichtung (E) ausgelenkt wird, und dass der Andrückbereich (9) zwischen den Vereinzelungsschritten elastisch gegen das Entnahmeende (7) gedrückt wird und den Stapel (2) zurückhält.

22. Verfahren nach Anspruch 21 unter Verwendung einer Separierungsvorrichtung nach einem der Ansprüche 1 bis 20, **dadurch gekennzeichnet, dass** eine Vereinzelung von bis zu 100 bis 120 Stapelgutelementen pro Minute möglich ist, wobei insbesondere bevorzugt eine Vereinzelung von im Bereich von 40 bis 50 Stapelgutelementen pro Minute gefahren wird.
